# EUROPÄISCHE PATENTSCHRIFT

(11) **EP 3 430 941 B1**
(45) Veröffentlichungstag und Bekanntmachung des Hinweises auf die Patenterteilung: **23.10.2019**
(21) Anmeldenummer: 18180027.7
(22) Anmeldetag: 27.06.2018
(51) Int. Cl.: A45F 5/10

(54) **TASCHENHALTER, INSBESONDERE HANDTASCHENHALTER**
BAG HOLDER, IN PARTICULAR HANDBAG HOLDER
PORTE-SAC, NOTAMMENT PORTE-SACS À MAIN

(30) Priorität: 21.07.2017 DE 202017104363 U
(43) Veröffentlichungstag der Anmeldung: 23.01.2019
(73) Patentinhaber: Hödicke, Frank, 35415 Pohlheim (DE)
(72) Erfinder: Hödicke, Frank, 35415 Pohlheim (DE)
(74) Vertreter: Keil & Schaafhausen Patent- und Rechtsanwälte PartGmbB

(56) Entgegenhaltungen:
- US-A1- 2014 317 892
- US-A1- 2016 298 675

## Beschreibung

Die Erfindung betrifft einen Taschenhalter, insbesondere einen Handtaschenhalter mit einem ersten Hakenelement und einem zweiten Hakenelement, wobei das erste Hakenelement und das zweite Hakenelement über eine Gelenkverbindung miteinander verbunden sind, wobei das erste Hakenelement eine erste Anlagefläche aufweist, die zu einer zweiten Anlagefläche am zweiten Hakenelement komplementär ausgebildet ist und die Gelenkverbindung ein Aneinanderlegen der ersten Anlagefläche an der zweiten Anlagefläche ermöglicht.

Ein derartiger Taschenhalter ist beispielsweise aus US 2016/0298675 A1 bekannt. Der Handtaschenhalter weist ein erstes Hakenelement auf, das als Ring ausgebildet ist, der geöffnet werden kann. Ein zweites Hakenelement kann so auf den Ring geklappt werden, dass die Innenkontur des zweiten Hakenelements an der Außenkontur des Ringes anliegt. Jedes der beiden Hakenelemente ist über eine Gelenkverbindung mit einem Träger verbunden, der einen Teil der Linkserstreckung des ersten Hakenelements abdeckt.

Ein weiterer Taschenhalter ist aus US 2014/0317892 A1 bekannt. Auch hier ist wieder ein erstes Hakenelement vorgesehen, das nach Art eines Karabinerhakens geöffnet werden kann, und ein zweites Hakenelement, an dessen Ende das erste Hakenelement verschwenkbar angeordnet ist. Eine Magnetanordnung ist vorgesehen, um die beiden Hakenelemente in einem aneinander geklappten Zustand festzuhalten.

Ein Taschenhalter wird verwendet, um beispielsweise in einem Restaurant die Handtasche an einem Tisch oder einem Stuhl aufzuhängen. Man vermeidet dadurch, dass die Handtasche auf dem Fußboden abgestellt werden muss. Das erste Hakenelement dient dann dazu, den Taschenhalter an dem Tisch oder dem Stuhl anzubringen, während das zweite Hakenelement verwendet wird, den Griff der Handtasche einzuhängen. In den meisten Fällen ist es auch möglich, den Taschenhalter in umgekehrter Position zu verwenden, also das zweite Hakenelement am Tisch oder am Stuhl zu befestigen und die Handtasche in das erste Hakenelement einzuhängen.

Um den Taschenhalter verfügbar zu haben, muss man ihn in der Regel in der Handtasche mitnehmen. Hierbei besteht das Risiko, dass der Taschenhalter im Inneren der Handtasche verhakt oder in Eingriff mit anderen Gegenständen kommt, die im Inneren der Handtasche angeordnet sind. Dies gestaltet die Entnahme des Taschenhalters aus der Handtasche in manchen Fällen schwierig und kann sogar zu Beschädigungen führen. Auch dann, wenn der Taschenhalter auf andere Weise mitgeführt wird, beispielsweise außen an die Handtasche angehängt, können sich Probleme bei der Handhabung ergeben.

Der Erfindung liegt die Aufgabe zugrunde, einen Taschenhalter zur Verfügung zu stellen, der praktisch in der Handhabung ist.

Diese Aufgabe wird bei einem Taschenhalter der eingangs genannten Art dadurch gelöst, dass die Anlageflächen jeweils die Form von zwei Bögen aufweisen, die mit entgegengesetzter Krümmung ausgebildet sind und aneinander anschließen.

Damit kann man die beiden Hakenelemente mit ihren beiden Anlageflächen aneinanderlegen, so dass der Taschenhalter insgesamt eine kompakte Form erhält und das Risiko, dass sich der Taschenhalter mit anderen Gegenständen im Inneren der Handtasche in Eingriff kommt, vermindert wird. Mit der kompakten Form erhält der Taschenhalter ein formschönes Aussehen, so dass er auch außen an der Tasche befestigt und sichtbar getragen werden kann. Die beiden Hakenelemente bilden dann die Form eines "Yin und Yang". Damit ergeben sich relativ große Anlageflächen und ein guter Eingriff der beiden Hakenelemente ineinander.

In einer bevorzugten Ausgestaltung ist vorgesehen, dass die beiden Hakenelemente im aneinander liegenden Zustand zumindest im Bereich einer Stoßstelle zwischen den beiden Hakenelementen eine geschlossene Außenumfangskontur bilden. Man vermeidet also eine größere Lücke zwischen den beiden Hakenelementen. Ein kleiner Schlitz ist allerdings zulässig, was aus Fertigungsgründen in der Regel nicht vermeidbar ist. Die geschlossene Außenkontur vermindert das Risiko, dass sich der Taschenhalter irgendwo verhakt, weiter.

In einer bevorzugten Ausgestaltung weisen die beiden Hakenelemente im aneinander liegenden Zustand eine zumindest abschnittsweise kreislinienförmige Außenumfangskontur auf. Damit ist die Außenumfangskontur rund ausgebildet und der Taschenhalter lässt sich dann problemlos aus der Handtasche nehmen. Die kreislinienförmige Außenumfangskontur ergibt auch eine angenehme Haptik.

Vorzugsweise sind die Bögen als Kreisbögen ausgebildet. Dies ergibt ein angenehmes Gesamterscheinungsbild.

In einer bevorzugten Ausgestaltung weist mindestens ein Hakenelement eine Magnetanordnung auf, die im aneinander liegenden Zustand der Hakenelemente eine Haltekraft zwischen den Hakenelementen erzeugt. Die Hakenelemente können also nicht ohne weiteres gegeneinander verschwenkt oder verdreht werden. Sie bleiben im aneinander liegenden Zustand vielmehr durch die Magnetanordnung festgehalten. Dies erleichtert die Handhabung.

In einer bevorzugten Ausgestaltung ermöglicht die Gelenkverbindung ein Verschwenken und ein Verdrehen der beiden Hakenelemente relativ zueinander. Ein Verschwenken der beiden Hakenelemente bedeutet ein Auseinanderklappen der beiden Hakenelemente, so dass ein Haken, der an jedem Hakenelement ausgebildet ist, für die bestimmungsgemäße Funktion zur Verfügung steht, also für das Einhaken des Griffs der Handtasche oder eines anderen Gegenstandes, beispielsweise eines kleinen Regenschirms, und für das Aufhängen des Taschenhalters am Tisch oder am Stuhl. Zusätzlich können die beiden Hakenelemente auch noch gegeneinander verdreht werden. Das Verdrehen erfolgt um eine Rotationsachse, die im Wesentlichen senkrecht zu der Schwenkachse liegt. Damit lässt sich der Taschenhalter zum einen in eine S-Form öffnen und zum anderen in eine C-Form. Die S-Form wird beispielsweise verwendet, wenn man den Taschenhalter an einem Stuhl aufhängen möchte, beispielsweise an einer Rücken- oder Armlehne. In diesem Fall ist nur ein Verschwenken der beiden Hakenelemente relativ zueinander erforderlich, also ein Aufklappen. Die C-Form wird verwendet, wenn man den Taschenhalter beispielsweise an einer Tischplatte aufhängen möchte. Hier ist dann zusätzlich noch ein Verdrehen der beiden Hakenelemente relativ zueinander erforderlich.

In einer bevorzugten Ausgestaltung ist vorgesehen, dass die Gelenkverbindung einen im ersten Hakenelement drehbar gelagerten ersten Drehbolzen und einen im zweiten Hakenelement drehbar gelagerten zweiten Drehbolzen aufweist, wobei der erste Drehbolzen und der zweite Drehbolzen durch einen Verbindungsbolzen miteinander verbunden sind. In diesem Fall erfolgt beim Aufklappen der beiden Hakenelemente ein Verschwenken der Hakenelemente um zwei Drehachsen, wobei diese beiden Drehachsen durch die Drehbolzen gebildet sind. Genauer gesagt, erfolgt ein Verschwenken des Verbindungsbolzens gegenüber beiden Hakenelementen.

Hierbei ist bevorzugt, dass der Verbindungsbolzen gegenüber mindestens einem der Drehbolzen um eine Rotationsachse verdrehbar ist, die zu einer Drehachse dieses Drehbolzens orthogonal angeordnet ist. Der Begriff "orthogonal" muss nicht unbedingt streng im mathematischen Sinn verstanden werden. Gewisse Toleranzen sind zulässig. Durch die Rotationsachse ist es möglich, die beiden Hakenelemente nicht nur gegeneinander zu verschwenken, sondern auch gegeneinander zu verdrehen.

Vorzugsweise weist die Gelenkanordnung eine lösbare Verdrehsicherung auf. Man kann dann die beiden Hakenelemente in einer einmal eingenommenen Drehposition relativ zueinander fixieren. In der Regel werden zwei Drehpositionen möglich sein, nämlich einmal die oben genannte S-Form und einmal die oben genannte C-Form.

In einer bevorzugten Ausgestaltung wirkt die Magnetanordnung auf den Verbindungsbolzen. Dies hat den Vorteil, dass die Hakenelemente selbst nicht unbedingt magnetisierbar sein müssen, sie können also beispielsweise aus einem Material gefertigt sein, das durch einen Magneten nicht angezogen wird. Es reicht aus, wenn die Magnetanordnung auf den Verbindungsbolzen wirkt, so dass der Verbindungsbolzen nur unter Überwindung einer gewissen Losbrechkraft von der Magnetanordnung weggezogen werden kann. Es ist allerdings von Vorteil, wenn die Magnetanordnung für jedes Hakenelement jeweils einen Magneten aufweist. Die Wirkung der Magnetanordnung auf den Verbindungsbolzen kann auch indirekt erfolgen, beispielsweise über ein oder mehrere Elemente der Verdrehsicherung.

In einer bevorzugten Ausgestaltung ist vorgesehen, dass der Verbindungsbolzen eine wirksame Länge aufweist, die im aneinander liegenden Zustand der Hakenelemente der Summe der Radien des konvexen und des konkaven Bogens der Anlagefläche auf einer Linie entspricht, in der eine Mittelachse des Verbindungsbolzens angeordnet ist. Dies führt dann dazu, dass im auseinandergeklappten Zustand die beiden Hakenelemente quasi aneinander anschließen, der Taschenhalter also auch im betriebsbereiten Zustand optisch eine kompakte Form aufweist.

Hierbei ist bevorzugt, dass die Enden der Anlageflächen im aneinander anliegenden Zustand der Hakenelemente auf der Linie liegen.

In einer bevorzugten Ausgestaltung ist vorgesehen, dass die Anlagefläche eine elastische Oberfläche aufweist. Die elastische Oberfläche kann dann verwendet werden, um den Taschenhalter an der Tischplatte oder an der Stuhllehne aufzuhängen, ohne dass das Risiko besteht, dass die Tischplatte oder die Stuhllehne verkratzt wird. Zusätzlich verringert die elastische Oberfläche die Gefahr des Abrutschens des Taschenhalters, beispielsweise von einer glatten Oberfläche.

Hierbei ist bevorzugt, dass die elastische Oberfläche durch einen Einsatz gebildet ist. Der Einsatz kann dann in einem geringen Maße über die erste Anlagefläche überstehen. Hierbei ist es günstig, wenn die zweite Anlagefläche eine Nut aufweist, die den Überstand des Einsatzes aufnehmen kann.

Die Erfindung wird im Folgenden anhand eines bevorzugten Ausführungsbeispiels in Verbindung mit der Zeichnung beschrieben. Hierin zeigen:
- Fig. 1: einen Taschenhalter in geschlossener Form,
- Fig. 2: den Taschenhalter nach Fig. 1 in einer Schnittansicht,
- Fig. 3: den Taschenhalter geöffnet in einer ersten Form und
- Fig. 4: den Taschenhalter geöffnet in einer zweiten Form.

In allen Figuren sind gleiche Elemente mit den gleichen Bezugszeichen versehen.

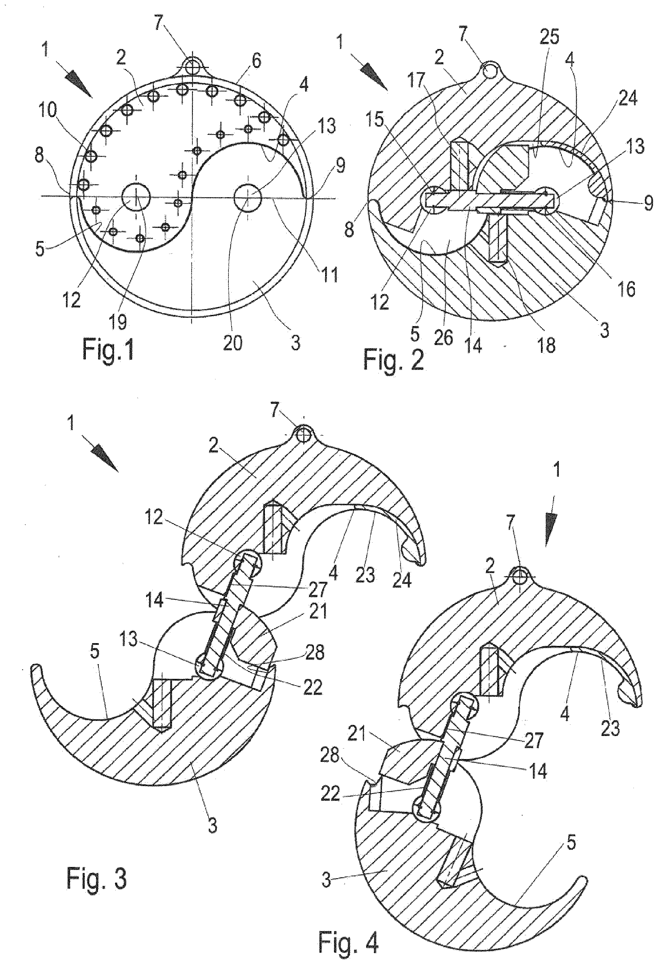

Fig. 1 zeigt einen Taschenhalter 1 mit einem ersten Hakenelement 2 und einem zweiten Hakenelement 3. Das erste Hakenelement 2 weist eine erste Anlagefläche 4 auf und das zweite Hakenelement weist eine zweite Anlagefläche 5 auf. Die beiden Anlageflächen 4, 5 sind komplementär zueinander ausgebildet. In der in Fig. 1 dargestellten geschlossenen Form des Taschenhalters liegen die beiden Anlageflächen 4, 5 aneinander an.

Im aneinander liegenden Zustand weist der Taschenhalter 1 eine etwa kreislinienförmige Außenumfangskontur 6 auf. Die Außenumfangskontur ist durch eine Öse 7 unterbrochen. Auch wenn weitere derartige Unterbrechungen vorgesehen sein können, bildet der Taschenhalter 1 im geschlossenen Zustand ein im Wesentlichen kreisscheibenförmiges Gebilde.

Die Außenkontur 6 ist geschlossen. Dies gilt zumindest für den Bereich von Stoßstellen 8, 9, an denen die beiden Hakenelemente 2, 3 im Bereich der Außenkontur aneinander anstoßen. Ein kleiner Schlitz lässt sich zwar in der Regel fertigungstechnisch nicht vermeiden. Es wird jedoch keine Lücke oder Stufe gebildet, in der sich Gegenstände, die im Innern einer Handtasche angeordnet sind, in der der Taschenhalter 1 transportiert werden kann, verhaken können.

Die erste Anlagefläche 4 ist durch zwei Bögen gebildet, die mit entgegengesetzter Krümmung ausgebildet sind und in der Mitte des Taschenhalters (bezogen auf die Fläche, die in Fig. 1 dargestellt ist) aneinander anschließen. Von links nach rechts (bezogen auf die Darstellung der Fig. 1) wird die Anlagefläche 4 also durch einen Bogen mit konvexer Krümmung gebildet, an der sich dann ein Bogen mit konkaver Krümmung anschließt. Im dargestellten Ausführungsbeispiel sind die beiden Bögen als Kreisbögen ausgebildet. Da die zweite Anlagefläche 5 hierzu komplementär ausgebildet ist, ergibt sich eine Form, die einem "Yin-Yang" entspricht. Die Außenkontur ist vorzugsweise im Wesentlichen kreisförmig.

Das erste Hakenelement 2 kann mit Schmuckelementen 10 versehen sein, beispielsweise echte oder falsche Edelsteine. Das zweite Hakenelement 3 kann ebenfalls mit Schmuckelementen versehen werden.

Auf einer Linie 11, die die beiden Stoßstellen 8, 9 an den Enden der beiden Hakenelemente 2, 3 verbindet, sind ein erster Drehbolzen 12 im ersten Hakenelement 2 und ein zweiter Drehbolzen 13 im zweiten Hakenelement 3 angeordnet. Der erste Drehbolzen 12 ist im ersten Hakenelement 2 drehbar und der zweite Drehbolzen 13 ist im zweiten Hakenelement 3 drehbar gelagert. Wie man in den Fig. 2 bis 4 erkennen kann, sind der erste Drehbolzen 12 und der zweite Drehbolzen 13 durch einen Verbindungsbolzen 14 miteinander verbunden. Der Verbindungsbolzen 14 ist durch einen Sicherungsring 15 im ersten Drehbolzen 12 befestigt und durch einen zweiten Sicherungsring 16 im zweiten Drehbolzen 13.

Im ersten Hakenelement 2 ist ein erster Magnet 17 und im zweiten Hakenelement 3 ist ein zweiter Magnet 18 angeordnet. Die beiden Magnete 17, 18 bilden eine Magnetanordnung. Die beiden Magnete 17, 18 wirken mit dem Verbindungsbolzen 14 zusammen, d.h. sie üben eine anziehende Kraft auf den Verbindungsbolzen 14 aus. Man muss also eine gewisse Kraft aufbringen, um den Verbindungsbolzen 14 gegenüber dem ersten Hakenelement 2 und gegenüber dem zweiten Hakenelement 3 zu verschwenken.

Der Verbindungsbolzen 14 ist gegenüber dem ersten Drehbolzen 12 und dem zweiten Drehbolzen 13 verdrehbar. Dadurch ist es möglich, die beiden Hakenelemente 2, 3 des Taschenhalters 1 nicht nur aufzuklappen, wie dies in Fig. 3 dargestellt ist, so dass sich eine S-Form ergibt, sondern auch noch gegeneinander zu verdrehen, so dass sich eine C-Form ergibt, wie in Fig. 4 dargestellt. Die durch die Bolzen 12, 13 und den Verbindungsbolzen 14 gebildete Gelenkverbindung erlaubt also nicht nur eine Bewegung der beiden Hakenelemente 2, 3 um eine erste Achse und um eine zweite Drehachse, die bezogen auf die Darstellung in der Zeichnung senkrecht zur Zeichenebene stehen, sondern auch um eine dritte Achse, die in der Zeichenebene liegt. Die erste und die zweite Achse liegen also im Wesentlichen orthogonal zur dritten Achse. Um die Erläuterung zu vereinfachen, werden die Achsen, die auf der Zeichenebene senkrecht stehen, als "Schwenkachse" bezeichnet und die Achse, die in der Zeichenebene liegt, als "Rotationsachse". Dementsprechend ermöglicht die Gelenkverbindung ein Verschwenken der beiden Hakenelemente 2, 3 um die Schwenkachsen und ein Verdrehen der beiden Hakenelemente 2, 3 relativ zueinander um die Rotationsachse. Die Schwenkachsen 19, 20 sind in Fig. 1 zu erkennen. Die Rotationsachse läuft parallel zur Linie 11. Wenn man die beiden Hakenelemente 2, 3 auseinander zieht, wird der Verbindungsbolzen 4 gegenüber dem ersten Hakenelement 2 und gleichzeitig gegenüber dem zweiten Hakenelement 3 verschwenkt. Dadurch ergibt sich die in Fig. 3 dargestellte S-Form. Man kann dann die Anlagefläche 4 verwenden, um den Taschenhalter 8 an einer Stuhllehne oder dergleichen aufzuhängen. Die Anlagefläche 5 steht dann zur Verfügung, um den Griff der Handtasche aufzunehmen.

Wenn gewünscht ist, dass der Schwerpunkt einer aus Taschenhalter 1 und Handtasche gebildeten Anordnung unterhalb eines Aufhängepunkts liegt, dann kann man die beiden Hakenelemente 2, 3 noch gegeneinander verdrehen, also um den Verbindungsbolzen 14. Diese Verdrehung erfolgt über einen Winkel von 180°, so dass sich die in Fig. 4 dargestellte C-Form ergibt. In diesem Fall steht ebenfalls die erste Anlagefläche 4 zum Anhängen des Taschenhalters 1 an einer Tischplatte zur Verfügung, während die zweite Anlagefläche 5 zur Aufnahme des Griffs der Handtasche dienen kann.

Die beiden Drehbolzen 12, 13 und der Verbindungsbolzen 14 bilden zusammen eine Gelenkverbindung. Die Gelenkverbindung weist eine lösbare Verdrehsicherung auf, so dass die beiden Hakenelemente 2, 3 in einer einmal eingenommenen Drehposition relativ zueinander fixiert werden können.

Hierzu ist ein Verriegelungsdrücker 21 vorgesehen, der gegen die Kraft einer Druckfeder 22 auf dem Verbindungsbolzen 14 verschiebbar gelagert ist. Der Verbindungsbolzen 14 ist frei gegenüber dem Verriegelungsdrücker 21 drehbar.

Der Verriegelungsdrücker 21 greift im ungedrückten Zustand in Nuten ein, die in den Hakenelementen 2, 3 vorgesehen sind. Auf diese Weise sperrt der Verriegelungsdrücker 21 die Hakenelemente 2, 3 gegen ein Verdrehen relativ zueinander. Im gedrückten Zustand greift der Verriegelungsdrücker 21 nicht mehr in die beiden Nuten ein und ermöglicht so ein Verdrehen der beiden Hakenelemente 2, 3 relativ zueinander um die Längsachse des Verbindungsbolzens 14. Nach einer Verdrehung der beiden Hakenelemente 2, 3 um 180° relativ zueinander kann der Verriegelungsdrücker wieder mittels der Kraft der Druckfeder 22 in die Nut des Hakenelements 2 eingreifen und somit den Taschenhalter 1 auch in der in Fig. 4 dargestellten C-Form gegen ein Verdrehen sperren.

Die oben erwähnte Magnetanordnung kann auch indirekt auf den Verbindungsbolzen 14 wirken. Beispielsweise kann der Magnet 18 über den Verriegelungsdrücker 21 auf den Verbindungsbolzen 14 wirken.

Das zweite Hakenelement 2 weist im Bereich der ersten Anlagefläche eine elastische Oberfläche 23 auf. Diese Oberfläche 23 kann in einem Einsatz 24 ausgebildet sein, der in einer Nut 25 im ersten Hakenelement 2 aufgenommen ist. Die zweite Anlagefläche 5 kann dann eine Nut 26 aufweisen, die den über die erste Anlagefläche 4 überstehenden Teil des Einsatzes 4 aufnehmen kann. Die elastische Oberfläche stellt sicher, dass eine Oberfläche eines Tischs oder einer Stuhllehne nicht verkratzt wird, wenn der Taschenhalter 1 hier eingehängt wird. Ferner vermeidet sie ein Ver- oder Abrutschen des Taschenhalters 1 auf bzw. von einer glatten Oberfläche.

Wie man insbesondere in Fig. 1 erkennen kann, sind die beiden Schwenkachsen 19, 20 jeweils gleich weit vom Außenumfang 6 des Taschenhalters 1 im geschlossenen Zustand entfernt. Diese Entfernung bezieht sich dabei auf die Linie 11. Der Abstand zwischen den beiden Schwenkachsen 19, 20 entspricht der Summe der Radien des konvexen und des konkaven Bogens auf beide Flächen 4, 5 auf der Linie 11, die die beiden Enden 8, 9 der beiden Hakenelemente 4, 5 verbindet. Da die Drehbolzen 12, 13 eine gewisse räumliche Ausdehnung aufweisen müssen, kann der Verbindungsbolzen 14 eine etwas größere Länge aufweisen, um eine ausreichende Befestigungsmöglichkeit in dem Drehbolzen 12, 13 sicherzustellen. Dadurch wird sichergestellt, dass im geöffneten Zustand des Taschenhalters 1 die beiden Hakenelemente 2, 3 aneinander anliegen und zwar mit den konvexen Abschnitten der Bögen der Anlageflächen 4, 5. Dadurch ergibt sich im geöffneten Zustand ein geschlossener Gesamteindruck.

In den Hakenelementen 2, 3 sind noch Anschläge 27, 28 vorgesehen, gegen die der Verbindungsbolzen 14 bzw. der Verriegelungsdrücker 21 schlägt, wenn die beiden Hakenelemente 2, 3 ihren maximalen Schwenkwinkel eingenommen haben. Dadurch wird der Schwenkwinkel der beiden Hakenelemente 2, 3 relativ zueinander begrenzt.

## Patentansprüche

1. Taschenhalter, insbesondere Handtaschenhalter (1) mit einem ersten Hakenelement (2) und einem zweiten Hakenelement (3), wobei das erste Hakenelement (2) und das zweite Hakenelement (3) über eine Gelenkverbindung (12-14) miteinander verbunden sind, wobei das erste Hakenelement (2) eine erste Anlagefläche (4) aufweist, die zu einer zweiten Anlagefläche (5) am zweiten Hakenelement (3) komplementär ausgebildet ist und die Gelenkverbindung (12-14) ein Aneinanderlegen der ersten Anlagefläche (4) an der zweiten Anlagefläche (5) ermöglicht, **dadurch gekennzeichnet, dass** die Anlageflächen (4, 5) jeweils die Form von zwei Bögen aufweisen, die mit entgegengesetzter Krümmung ausgebildet sind und aneinander anschließen.

2. Taschenhalter nach Anspruch 1, **dadurch gekennzeichnet, dass** die beiden Hakenelemente (2, 3) im aneinander liegenden Zustand zumindest im Bereich einer Stoßstelle (8, 9) zwischen den beiden Hakenelementen eine geschlossene Außenumfangskontur (6) bilden.

3. Taschenhalter nach Anspruch 1 oder 2, **dadurch gekennzeichnet, dass** die beiden Hakenelemente (2, 3) im aneinander liegenden Zustand eine zumindest abschnittsweise kreislinienförmige Außenumfangskontur (6) aufweisen.

4. Taschenhalter nach einem der Ansprüche 1 bis 3 **dadurch gekennzeichnet, dass** die Bögen als Kreisbögen ausgebildet sind.

5. Taschenhalter nach einem der Ansprüche 1 bis 4, **dadurch gekennzeichnet, dass** mindestens ein Hakenelement (2, 3) eine Magnetanordnung (17, 18) aufweist, die im aneinander liegenden Zustand der Hakenelemente (2, 3) eine Haltekraft zwischen den Hakenelementen (2, 3) erzeugt.

6. Taschenhalter nach einem der Ansprüche 1 bis 5, **dadurch gekennzeichnet, dass** die Gelenkverbindung (12-14) ein Verschwenken und ein Verdrehen der beiden Hakenelemente (2, 3) relativ zueinander ermöglicht.

7. Taschenhalter nach einem der Ansprüche 1 bis 6, **dadurch gekennzeichnet, dass** die Gelenkverbindung (12-14) einen im ersten Hakenelement (2) drehbar gelagerten ersten Drehbolzen (12) und einen im zweiten Hakenelement (3) drehbar gelagerten zweiten Drehbolzen (13) aufweist, wobei der erste Drehbolzen (12) und der zweite Drehbolzen (13) durch einen Verbindungsbolzen (14) miteinander verbunden sind.

8. Taschenhalter nach Anspruch 7, **dadurch gekennzeichnet, dass** der Verbindungsbolzen (14) gegenüber mindestens einem der Drehbolzen (12, 13) um eine Rotationsachse verdrehbar ist, die zu einer Schwenkachse (19, 20) dieses Drehbolzens (12, 13) orthogonal angeordnet ist.

9. Taschenhalter nach Anspruch 8, **dadurch gekennzeichnet, dass** die Gelenkanordnung (12-14) eine lösbare Verdrehsicherung (21, 22) aufweist.

10. Taschenhalter nach einem der Ansprüche 7 bis 9, **dadurch gekennzeichnet, dass** die Magnetanordnung (17, 18) auf den Verbindungsbolzen wirkt (14).

11. Taschenhalter nach einem der Ansprüche 7 bis 10, **dadurch gekennzeichnet, dass** der Verbindungsbolzen (14) eine wirksame Länge aufweist, die im aneinander liegenden Zustand der Hakenelemente (2, 3) der Summe der Radien des konvexen und konkaven Bogens der Anlageflächen (4, 5) auf einer Linie (11) entspricht, in der eine Mittelachse des Verbindungsbolzens (14) angeordnet ist.

12. Taschenhalter nach Anspruch 11, **dadurch gekennzeichnet, dass** die Enden der Anlageflächen (4, 5) im aneinander liegenden Zustand der Hakenelemente (2, 3) auf der Linie (11) liegen.

13. Taschenhalter nach einem der Ansprüche 1 bis 12, **dadurch gekennzeichnet, dass** die erste Anlagefläche (4) eine elastische Oberfläche (23) aufweist, die insbesondere durch einen Einsatz (24) gebildet ist.

14. Taschenhalter nach einem der Ansprüche 1 bis 13, **dadurch gekennzeichnet, dass** eine Schwenkbewegungsbegrenzung (27, 28) vorgesehen ist, mit der ein Verschwenken der beiden Hakenelemente (2, 3) relativ zueinander begrenzt ist.

## Claims

1. Bag holder, in particular handbag holder (1) with a first hook element (2) and a second hook element (3), the first hook element (2) and the second hook element (3) being connected by an articulated joint (12-14), the first hook element (2) having a first contact surface (4) which is complementary to a second contact surface (5) on the second hook element (3) and the articulated joint (12-14) enables the first contact surface (4) and the second contact surface (5) to be placed in contact against each other, **characterised in that** the contact surfaces (4, 5) have the shape of two arches with the curvature in opposite directions and abut each other.

2. Bag holder as in claim 1, **characterised in that** the two hook elements (2, 3) in contact mode form a closed outside circumference contour (6) at least in the area of one butt joint (8, 9) between the two hook elements.

3. Bag holder as in claim 1 or 2, **characterised in that** the two hook elements (2, 3) in contact mode at least in sections show a circular outside circumference contour (6).

4. Bag holder as claimed in one of the claims 1 to 3, **characterised in that** the arches have the form of circular arcs.

5. Bag holder as claimed in one of the claims 1 to 4, **characterised in that** at least one hook element (2, 3) is equipped with an arrangement of magnets (17, 18) which, with the hook elements (2, 3) abutting each other, generate a holding force between the hook elements (2, 3).

6. Bag holder as claimed in one of the claims 1 to 5, **characterised in that** the articulated joint (12-14) allows swivelling and pivoting of the two hook elements (2, 3) relative to each other.

7. Bag holder as claimed in one of the claims 1 to 6, **characterised in that** the articulated joint (12-14) is fitted with a first pin (12) pivot-mounted in the first hook element (2) and a second pin (13) pivot-mounted in the second hook element (3), the first pin (12) and the second pin (13) being connected by a connecting bolt (14).

8. Bag holder as claimed in claim 7, **characterised in that** the connecting bolt (14) can be twisted relative to one of the pins (12, 13) around a rotational axis which is orthogonal to a swivel axis (19, 20) of this pin (12, 13).

9. Bag holder as claimed in claim 8, **characterised in that** the articulated joint (12-14) is fitted with a releasable anti-twist device (21, 22).

10. Bag holder as claimed in one of the claims 7 to 9, **characterised in that** the arrangement of magnets (17, 18) acts on the connecting bolt (14).

11. Bag holder as **characterised in** one of the claims 7 to 10, **characterised in that** the connecting bolt (14) has an effective length which, with the hook elements (2, 3) in contact, corresponds to the sum of the radii of the convex and concave arcs of the contact surfaces (4, 5) in one line (11) which coincides with a centre line of the connecting bolt (14).

12. Bag holder as claimed in claim 11, **characterised in that** the ends of the contact surfaces (4, 5) are also on line (11) with the hook elements (2, 3) being in contact.

13. Bag holder as claimed in one of the claims 1 to 12, **characterised in that** the first contact surface (4) has an elastic surface (23) which is mainly formed by an insert (24).

14. Bag holder as claimed in one of the claims 1 to 13, **characterised in that** a swivelling motion limiter (27, 28) is provided thanks to which the swivelling motion of the two hook elements (2, 3) relative to each other is limited.

## Revendications

1. Accroche sac, notamment accroche sac à main (1) avec un premier élément d'accrochage (2) et un deuxième élément d'accrochage (3), le premier élément d'accrochage (2) et le deuxième élément d'accrochage (3) étant lié par un joint articulé (12-14), le premier élément d'accrochage (2) ayant une première surface de contact (4) qui est complémentaire à une deuxième surface de contact (5) au deuxième élément d'accrochage (3), et le joint articulé (12-14) rend possible le contact de la première surface de contact (4) avec la deuxième surface de contact (5), **caractérisé en ce que** les surfaces de contact (4, 5) ont la forme de deux arcs chacun qui ont une courbure opposée et se touchent.

2. Accroche sac selon la revendication 1, **caractérisé en ce que** les deux éléments d'accrochage (2, 3) en contact forment un contour fermé de la circonférence extérieure (6) au moins dans la région d'un aboutement (8, 9).

3. Accroche sac selon la revendication 1 ou 2, **caractérisé en ce que** les deux éléments d'accrochage (2, 3) en contact forment un contour de la circonférence extérieure (6) circulaire au moins par segments.

4. Accroche sac selon une des revendications 1 à 3, **caractérisé en ce que** les arcs ont la forme d'arcs circulaires.

5. Accroche sac selon une des revendications 1 à 4, **caractérisé en ce qu'**au moins un élément d'accrochage (2, 3) présente un ensemble d'aimants (17, 18) qui génère une force de retenue entre les éléments d'accrochage (2, 3) avec les éléments d'accrochage (2, 3) en contact.

6. Accroche sac selon une des revendications 1 à 5, **caractérisé en ce que** le joint articulé (12-14) rend possible le pivotement et la rotation des deux éléments d'accrochage (2, 3) l'un relativement à l'autre.

7. Accroche sac selon une des revendications 1 à 6, **caractérisé en ce que** le joint articulé (12-14) présente un premier pivot (12) monté à rotation dans le premier élément d'accrochage (2) et un deuxième pivot (13) monté à rotation dans le deuxième élément d'accrochage (3), le premier pivot (12) et le deuxième pivot (14) étant raccordés entre eux par une tige de liaison (14).

8. Accroche sac selon la revendication 7, **caractérisé en ce que** la tige de liaison (14) peut tourner relatif à au moins un des pivots (12, 13) autour d'un axe de rotation qui est positionné orthogonal à un axe de pivotement (19, 20) de ce pivot (12, 13).

9. Accroche sac selon la revendication 8, **caractérisé en ce que** le joint articulé (12-14) présente un dispositif anti-rotation dégageable (21, 22).

10. Accroche sac selon une des revendications 7 à 9, **caractérisé en ce que** l'ensemble d'aimants (17, 18) agit sur la tige de liaison (14).

11. Accroche sac selon une des revendications 7 à 10, **caractérisé en ce que** la tige de liaison (14) a une longueur effective qui, si les éléments d'accrochage (2, 3) sont en contact, correspond à la somme des rayons des arcs convexes et concaves des surface de contact (4, 5) sur une ligne (11), sur laquelle se trouve une ligne centrale de la tige de liaison (14).

12. Accroche sac selon la revendication 11, **caractérisé en ce que** les bouts des surfaces de contact (4, 5) sont situés sur la ligne (11) si les éléments d'accrochage (2, 3) sont en contact.

13. Accroche sac selon une des revendications 1 à 12, **caractérisé en ce que** la première surface de contact (4) présente une surface élastique (23) qui se forme surtout par un empiècement (24).

14. Accroche sac selon une des revendications 1 à 13, **caractérisé en ce qu'**un limiteur du pivotant (27, 28) est prévu pour limiter le pivotement des deux éléments d'accrochage (2, 3) l'un relativement à l'autre.
